# EUROPÄISCHE PATENTSCHRIFT

(11) **EP 3 878 727 B1**
(45) Veröffentlichungstag und Bekanntmachung des Hinweises auf die Patenterteilung: **27.09.2023**
(21) Anmeldenummer: 21161935.8
(22) Anmeldetag: 11.03.2021
(51) Int. Cl.: B62K 19/46, B62K 7/04, B62J 9/20

(54) **LASTENFAHRRADBEHÄLTER**
DELIVERY BICYCLE CONTAINER
RÉCEPTACLE DE BICYCLETTE DE TRANSPORT

(30) Priorität: 12.03.2020 DE 202020101380 U
(43) Veröffentlichungstag der Anmeldung: 15.09.2021
(73) Patentinhaber: RTI Sports GmbH, 56070 Koblenz (DE)
(72) Erfinder: Graeve, Arndt, 56072 Koblenz (DE); Rasche, Johannes, 64285 Darmstadt (DE); Arnold, Franc, 56068 Koblenz (DE)
(74) Vertreter: dompatent von Kreisler Selting Werner - Partnerschaft von Patent- und Rechtsanwälten mbB

(56) Entgegenhaltungen:
- WO-A1-2016/060604
- US-A1- 2018 154 970
- Anonymoushttps://www.E-Lastenrad.De/dreira d/butchers-Bicycles-Mk1-E: "Butchers & Bicycles Mk1-E kaufen - Versandkostenfrei", , 30. Oktober 2015 (2015-10-30), Seiten 1-2, XP055820063, Gefunden im Internet: URL:https://www.e-lastenrad.de/dreirad/but chers-bicycles-mk1-e [gefunden am 2021-07-01] & Anonymous: "Cargo bike review: The Family Roller Coaster by Butchers & Bicycles - bakfiets family", , 26. Oktober 2016 (2016-10-26), Seiten 1-12, XP055820051, Gefunden im Internet: URL:http://www.bakfiets-family.net/cargo-b ike-review-the-family-roller-coaster-by-bu tchers-bicycles/ [gefunden am 2021-07-01] & Anonymous: "Butchers & Bicycles Mk1-E", Lastenrad, 30. Oktober 2015 (2015-10-30), Seiten 1-2, XP055792596, Gefunden im Internet: URL:https://www.e-lastenrad.de/dreirad/but chers-bicycles-mk1-e [gefunden am 2021-04-06] & Anonymous: "Butchers & Bicycles - Smartwheels "strong in electric bicycl
- Robbert Boogaard Tweewielers: "https://www.facebook.com/363677350344674/ videos/1590664830979247/?__so__=channel_ta b&__rv__=all_videos_card", , 1. Januar 2018 (2018-01-01), Seiten 1-1, XP055820365, Gefunden im Internet: URL:https://www.facebook.com/3636773503446 74/videos/1590664830979247/?__so__=channel _tab&__rv__=all_videos_car [gefunden am 2021-07-01] & Yokids: "Voque carry 3 kussens, - Voque bakfiets - Yokids.nl", , 1. Juli 2021 (2021-07-01), Seiten 1-4, XP055820376, Gefunden im Internet: URL:https://www.yokids.nl/webshop/voque-ba kfiets/detail/290/voque-carry-3--kussens.h tml [gefunden am 2021-07-01]
- Urban: "https://web.archive.org/web/2015121300030 0/http://www.urbanarrow.com/en/cargo-bike" , , 1. Januar 2015 (2015-01-01), Seiten 1-1, XP055820391, Gefunden im Internet: URL:https://web.archive.org/web/2015121300 0300/http://www.urbanarrow.com/en/cargo-bi ke [gefunden am 2021-07-01] & Anonymous: "De flightcase L, XL en XXL voor de Urban Arrow", , 1. Juli 2021 (2021-07-01), Seiten 1-1, XP055820384, Gefunden im Internet: URL:https://www.drbeykonline.nl/product/18 59764/flight-case-urban-arrow [gefunden am 2021-07-01]
- Big Babboe: "Montagehandleiding @BULLET Assembly Instructions @BULLET Montageanleitung @BULLET Instructions de montage", , 1. Januar 2012 (2012-01-01), Seiten 1-132, XP055822913, Gefunden im Internet: URL:https://www.babboe-manuals.com/wp-cont ent/uploads/2019/03/manual-babboe-big-web. pdf [gefunden am 2021-07-09]

## Beschreibung

Die Erfindung betrifft einen Lastenfahrradbehälter.

Lastenfahrräder, die zum Transport von Personen, insbesondere Kindern oder Lasten, geeignet sind, weisen einen Lastenfahrradbehälter auf. Lastenfahrradbehälter sind aus unterschiedlichem Material hergestellt. Insbesondere bei Lastenfahrradbehältern, die aus Kunststoffmaterial hergestellt sind, sind insbesondere Kanten erheblichem Verschleiß oder Beschädigungen ausgesetzt. Insbesondere die Oberkanten des Lastenfahrradbehälters sind stark beansprucht. Die Beanspruchung erfolgt beispielsweise beim Ein- und Aussteigen von Kindern sowie auch beim Einladen insbesondere schwerer Lasten, da diese häufig auf der Oberkante des Lastenfahrradbehälters abgestellt werden, bevor ein vollständiges Einladen erfolgt. Kinder treten beim Einsteigen und Aussteigen häufig auf die Oberkante des Lastenfahrradbehälters.

Ein Lastenfahrradbehälter mit den Merkmalen des Oberbegriffs des Anspruchs 1 ist in dem "Butchers & Bicycles Mk1-E" beschrieben. Auch die gattungsgemäße URL:https://web.archive.org/web/20151213000300/http:// www.urbanarrow.com/en/cargo-bike offenbart die Merkmale des Oberbegriffes des Anspruchs 1.

Aufgabe der Erfindung ist es, einen Lastenfahrradbehälter zu schaffen, bei dem das Einsteigen in einen Lastenfahrradbehälter vereinfacht ist.

Die Lösung der Aufgaben erfolgt durch einen Lastenfahrradbehälter gemäß Anspruch 1.

Ein erfindungsgemäßer Lastenfahrradbehälter weist ein Bodenelement, zwei einander gegenüberliegende Seitenwände, eine Rückwand sowie eine

Vorderwand auf. Hierbei kann der Lastenfahrradbehälter aus mehreren Einzelteilen zusammengesetzt sein. Insbesondere sind einzelne Elemente einstückig ausgebildet, wobei beispielsweise eine Seitenwand einstückig zumindest mit einem Teil der Vorwand oder einem Teil der Rückwand und/oder des Bodenelements ausgebildet ist. Besonders bevorzugt ist es, dass der Lastenfahrradbehälter im Wesentlichen aus zwei Teilen aufgebaut ist, die vertikal geteilt sind, so dass in besonders bevorzugter Ausführungsform jedes Bauteil eine Seitenwand und einen Teil der Vorderwand, der Rückwand und des Bodenelements aufweist. Vorzugsweise ist der Lastenfahrradbehälter somit in einer vertikalen Ebene geteilt.

Der erfindungsgemäße Lastenfahrradbehälter mit verbessertem Einstieg, ist insbesondere für Kinder geeignet. Erfindungsgemäß ist in mindestens einer der Seitenwände und/oder der Rückwand und/oder der Vorderwand eine Trittöffnung vorgesehen. Es ist somit insbesondere für Kinder möglich, zunächst einen Fuß in die Trittöffnung zu setzen und sodann das andere Bein über die Seitenwand, die Rückwand oder die Vorderwand zu bewegen, um in den Lastenfahrradbehälter einzusteigen. Zum Aussteigen kann die Trittöffnung ebenfalls genutzt werden. Bei einem auf dem Lastenfahrrad montierten Lastenfahrradbehälter befindet sich die Trittöffnung vorzugsweise 15 bis 35 cm über dem Boden.

Die Trittöffnung ist erfindungsgemäß seitlich in der Seitenwand und/oder der Rückwand und/oder der Vorderwand angeordnet. Die Trittfläche der Trittöffnung ist hierbei durch die entsprechende Wand ausgebildet. Hierbei ist es nicht erforderlich, dass unmittelbar unter der Trittöffnung ein Versteifungselement bzw. ein Rahmenelement vorgesehen ist.

Unabhängig vom Aufbau des Lastenfahrradbehälters ist vorzugsweise zum Verringern der Gefahr des Beschädigens an einer Oberkante ein Kantenschutzelement vorgesehen. Bei der Oberkante handelt es sich um eine Oberkante zumindest einer der Seitenwände und/oder der Rückwand und/oder der Vorderwand. Durch das Kantenschutzelement ist die Oberkante zumindest teilweise geschützt. Vorzugsweise ist ein Schutzelement in demjenigen Bereich, in dem beispielsweise Kinder auf die Oberkante treten oder in demjenigen Bereich, in dem Lasten in den Lastenfahrradbehälter geladen werden, angeordnet. Insofern ist es besonders bevorzugt, dass an den Oberkanten der beiden einander gegenüberliegenden Seitenwände jeweils ein Kantenschutzelement vorgesehen ist. Es ist auch möglich, ein umlaufendes Kantenschutzelement vorzusehen, so dass die gesamten Oberkanten geschützt sind. Ein derartiges Kantenschutzelement ist ggf. ein- oder mehrteilig ausgebildet.

Vorzugsweise ist das Kantenschutzelement formschlüssig mit der Oberkante verbunden. Durch eine derartige formschlüssige Verbindung erfolgt eine sichere und zuverlässige Verbindung des Kantenschutzelements mit der Oberkante des Lastenfahrradbehälters. Zusätzlich oder anstelle einer formschlüssigen Verbindung kann eine kraftschlüssige Verbindung mit der Oberkante, insbesondere durch Verkleben, erfolgen.

In besonders bevorzugter Weiterbildung der Erfindung umgreift das Kantenschutzelement die Oberkante zumindest teilweise. Insbesondere umgreift das Kantenschutzelement die Oberkante an einer Innenseite und/oder einer Außenseite der zumindest einen Seitenwand und/oder der Rückwand und/oder der Vorderwand. Bevorzugt ist es, dass das Kantenschutzelement die Oberkante an der Innenseite und der Außenseite umgreift. Ein derartiges Kantenschutzelement ist im Querschnitt zumindest teilweise U-förmig ausgebildet, wobei zusätzliche Ansätze wie nachstehend beschrieben vorgesehen sein können. Durch eine derartige Ausgestaltung des Kantenschutzelements sind die Oberkanten nicht nur auf einer Oberseite, sondern auch an einer Innenseite und Außenseite im Bereich der Oberkante geschützt. Hierdurch ist einerseits der Schutz verbessert und andererseits die Befestigung des Kantenschutzelements an der Oberkante verbessert.

Vorzugsweise ist an der Oberkante, insbesondere im Bereich der Oberkante, ein Wulst vorgesehen. Ein entsprechender Wulst ist an der Innenseite und/oder der Außenseite im Bereich zumindest einer der Seitenwände und/oder der Rückwand und/oder der Vorderwand vorgesehen. In dieser bevorzugten Ausführungsform ist der mindestens eine Wulst durch mindestens einen Ansatz des Kantenschutzelementes umgriffen. Durch ein derartiges Umgreifen ist die Verbindung des Kantenschutzelements mit der Oberkante weiter verbessert. In vertikaler Richtung, d.h. nach oben, hintergreift der mindestens eine Ansatz des Kantenschutzelements somit den Wulst. Vorzugsweise ist durch den Wulst somit ein Hinterschnitt ausgebildet. Beim Montieren oder auch beim Demontieren des Kantenschutzelements ist es somit erforderlich, das Kantenschutzelement ggf. etwas aufzubiegen oder elastisch zu verformen. Insbesondere schnappt das Kantenschutzelement bei der Demontage auf Grund des Hinterschnitts ein bzw. rastet in dieser Position ein.

Besonders bevorzugt ist es, dass die Oberkante in dem Bereich, in dem ein Kantenschutzelement angeordnet wird, nicht durch Befestigungselemente, wie Schrauben, Stifte u.dgl., beschädigt wird. Hierdurch würde ggf. die Stabilität des insbesondere aus einem Kunststoffmaterial hergestellten Lastenfahrradbehälters beeinträchtigt.

Alternativ oder zusätzlich zu einem Wulst kann insbesondere an einer Außenseite und/oder einer Innenseite einer der Seitenwände und/oder der Rückwand und/oder der Vorderwand im Bereich der Oberkante eine Nut vorgesehen sein. In die Nut ragt in montiertem Zustand ein Ansatz des Kantenschutzelements. Hierdurch ist wiederum ein Hinterschnitt verwirklicht, so dass insbesondere eine gute formschlüssige Verbindung des Kantenschutzelements mit der Oberkante realisiert ist.

Der mindestens eine Ansatz des Kantenschutzelements, der den Wulst umgreift und/oder in die Nut ragt, weist in montiertem Zustand nach innen in Richtung der entsprechenden Seitenwand und/oder Rückwand und/oder Vorderwand.

Vorzugsweise umgreift das Kantenschutzelement die Oberkante um mehr als 180°. Auch hierdurch ist wiederum ein entsprechender Hinterschnitt und ein zuverlässiges Verbinden des Kantenschutzelements mit der Oberkante realisiert. Hierbei kann das Kantenschutzelement mehrere insbesondere ebene und/oder gekrümmte Bereiche aufweisen. Im Querschnitt kann das Kantenschutzelement somit mehreckig und/oder zumindest teilweise konvex gekrümmt ausgebildet sein.

Des Weiteren ist es möglich, zusätzlich oder anstelle der formschlüssigen Verbindung eines Kantenschutzelements mit der Oberkante eine kraftschlüssige Verbindung, insbesondere durch Verkleben, herzustellen. Bevorzugt ist es, dass sowohl eine kraftschlüssige als auch eine formschlüssige Verbindung erfolgt. Die insbesondere durch Verkleben hergestellte kraftschlüssige Verbindung kann dadurch verbessert werden, dass die Oberkante im Bereich des Kantenschutzelements zumindest teilweise behandelt ist. Eine entsprechende Oberflächenbehandlung kann durch Aufrauen der Oberfläche erfolgen. Besonders bevorzugt ist es, dass die Oberfläche in diesem Bereich zumindest teilweise durch Halogenieren, insbesondere Fluorieren, behandelt ist. Insbesondere durch Fluorieren erfolgt ein Verändern der Oberfläche des insbesondere in diesem Bereich aus Kunststoff hergestellten Lastenfahrradbehälters derart, dass eine sehr feste Klebeverbindung realisiert werden kann. Dies ist insbesondere der Fall, wenn der Lastenfahrradbehälter zumindest in dem Bereich, in dem die Kantenschutzelemente angeordnet sind, aus einem Kunststoffmaterial hergestellt ist. Insbesondere ist ein derartiges Behandeln der Oberfläche vorteilhaft, wenn zumindest dieser Bereich des Lastenfahrradbehälters einen Partikelschaum, insbesondere EPP (expandierbares Polypropylen) aufweist bzw. aus diesem Material hergestellt ist.

Insbesondere auf Grund des beschriebenen bevorzugten verwendeten Materials für den Lastenfahrradbehälter ist diese Ausgestaltung möglich. Als Material wird insbesondere die Verwendung eines Partikelschaums und besonders bevorzugt die Verwendung von EPP bevorzugt. Es ist insofern erfindungsgemäß möglich und besonders bevorzugt, dass die Trittöffnung ausschließlich von Material des Lastenfahrradbehälters umgeben ist. Insbesondere ist die Trittöffnung unabhängig von dem Rahmenelement angeordnet. Beispielsweise kann der relevante Teil des Fahrradrahmens unterhalb dem Bodenelement des Lastenfahrradbehälters angeordnet sein, so dass die Trittöffnung seitlich neben und nicht oberhalb von Rahmenelementen angeordnet ist. Die beim Betreten der Trittöffnung auftretenden senkrechten Kräfte wirken somit im Wesentlichen, insbesondere ausschließlich, auf den Lastenfahrradbehälter. Selbstverständlich werden diese Kräfte seitlich in Richtung des Rahmens umgelenkt. Auf Grund der hohen Eigenstabilität des verwendeten Materials ist ein unmittelbares Abfangen der Kräfte durch ein unterhalb der Trittöffnung vorgesehenes Versteifungselement, insbesondere ein Rahmenelement, nicht erforderlich.

In besonders bevorzugter Ausführungsform ist zumindest an einer Oberseite der Trittöffnung, d.h. insbesondere der Trittfläche, ein Oberflächenschutzelement vorgesehen.

Vorzugsweise ist das Oberflächenschutzelement nicht nur an der Oberseite der Trittöffnung, sondern zusätzlich auch an einer der Oberseite gegenüberliegenden Unterseite und/oder einer Vorderkante vorgesehen. Die Vorderkante ist hierbei die nach außen weisende Kante unterhalb der Trittfläche. In besonders bevorzugter Ausführungsform ist das Oberflächenschutzelement somit im Querschnitt im Wesentlichen U-förmig ausgebildet.

Das Befestigen des Oberflächenschutzelements erfolgt in bevorzugter Ausführungsform kraftschlüssig, insbesondere durch Verkleben. Hierbei ist es entsprechend der Befestigung des Kantenschutzelements bevorzugt, dass die entsprechende Oberfläche zumindest teilweise behandelt ist, wobei wiederum ein Halogenieren, insbesondere Fluorieren der Oberfläche bevorzugt ist. Ggf. kann auch eine formschlüssige Verbindung erfolgen, indem zusätzlich eine Wulst oder eine Nut vorgesehen ist, in die ein Ansatz des Oberflächenschutzelements eingreift bzw. einrastet.

Vorzugsweise ist das Kantenschutzelement oder das Oberflächenschutzelement aus verschleißfestem Material hergestellt bzw. weist verschleißfestes Material auf. Insbesondere ist es bevorzugt, dass das Kantenschutzelement und/oder das Oberflächenschutzelement ein Metall aufweist, insbesondere aus Metall hergestellt ist. Besonders bevorzugt ist es, das Kantenschutzelement und/oder das Oberflächenschutzelement aus Blech herzustellen.

Der Lastenfahrradbehälter ist vorzugsweis derart ausgebildet, dass zumindest die Seitenwände und/oder die Rückwand und/oder die Vorderwand und/oder das Bodenelement zumindest teilweise, insbesondere vollständig, aus Kunststoff hergestellt ist. Ferner ist es bevorzugt, dass es sich bei dem Kunststoff um einen Partikelschaum handelt. Besonders bevorzugt ist die Verwendung von EPP (expandierbares Polypropylen). Hierbei ist es bevorzugt, dass der Lastenfahrradbehälter das vorstehende Material aufweist und insbesondere aus diesem hergestellt ist.

Nachfolgend wird die Erfindung anhand einer bevorzugten Ausführungsform unter Bezugnahme auf die anliegenden Zeichnungen näher erläutert.

Es zeigen:
Fig. 1 eine schematische Seitenansicht eines Lastenfahrrads mit dem erfindungsgemäß ausgebildeten Lastenaufnahmebehälter,
Fig. 2 eine perspektivische Seitenansicht eines erfindungsgemäßen Lastenaufnahmebehälters,
Fig. 3 einen schematischen perspektivischen Querschnitt des in Fig. 2 dargestellten Lastenaufnahmebehälters,
Fig. 4a eine schematische perspektivische Draufsicht eines Kantenschutzelements,
Fig. 4b eine schematische perspektivische Unteransicht des Kantenschutzelements,
Fig. 4c eine schematische Schnittansicht des Kantenschutzelements,
Fig. 5a eine schematische Draufsicht des Oberflächenschutzselements,
Fig. 5b eine schematische perspektivische Innenansicht des Oberflächenschutzelements und
Fig. 5c eine schematische Schnittansicht des Oberflächenschutzelements.

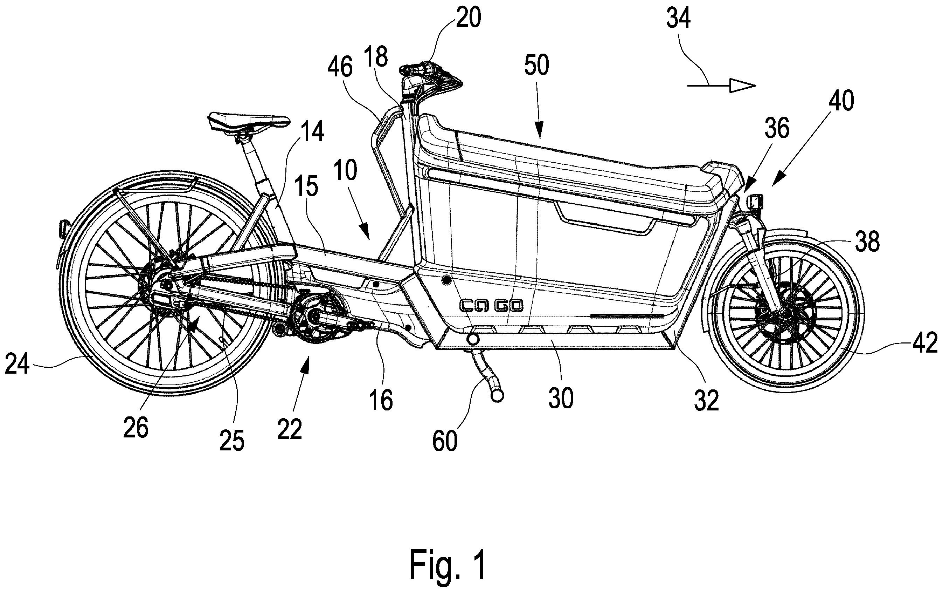

Eine bevorzugte Ausführungsform des erfindungsgemäßen Lastenfahrrads wie in Figur 1 dargestellt weist einen Lastenfahrrad-Rahmen 10 auf. Der Lastenfahrrad-Rahmen 10 weist im dargestellten Ausführungsbeispiel ein Sattelrohr 14, ein Oberrohr 15 und ein von einer Abdeckung verdecktes Unterrohr 16 sowie ein Lenkerrohr 18 auf. In dem Lenkerrohr 18 ist ein schwenkbares Rohr angeordnet, das mit einem Lenker 20 verbunden ist. Ferner ist zwischen dem Unterrohr 16 und dem Sattelrohr 14 im dargestellten Ausführungsbeispiel eine Antriebseinrichtung 22 angeordnet. Diese weist ein herkömmliches Tretlager auf, das mit einem Elektromotor verbunden ist, so dass das Treten von einem Elektromotor unterstützt werden kann. Der Antrieb eines Hinterrades 24 erfolgt über einen Antrieb mittels Zahnriemen 25 oder dergleichen. Ferner weist der Lastenfahrrad-Rahmen 10 einen Hinterbau 26 auf, der das Hinterrad 24 trägt. In dem dargestellten Ausführungsbeispiel ist ein einspuriges Lastenfahrrad dargestellt.

Mit dem Lenkerrohr 18 ist ein Griffelement 46 verbunden. Im dargestellten Ausführungsbeispiel ist das Griffelement an einer Rückseite des Lenkerrohrs 18 angeordnet und weist in Richtung des Hinterbaus 26 bzw. in Richtung des Sattelrohrs 14. Das Griffelement 46 ist somit in der Rahmenmittelebene angeordnet, in der beim dargestellten Lastenfahrrad auch die beiden Räder sowie das Sattelrohr 14, das Unterrohr 16 und das Lenkerrohr 18 angeordnet sind.

Um das Lastenrad anzuheben oder beispielsweise auf einen Hauptständer 60 zu heben, kann der Nutzer insbesondere am oberen Teil 48 des Griffelements angreifen.

Ein Lastenfahrradbehälter 50 weist ein Bodenelement 52, zwei Seitenelemente 54, eine Rückwand 56 sowie eine Vorderwand 58 auf. In dem dargestellten besonders bevorzugten Ausführungsbeispiel ist der Lastenfahrradbehälter aus im Wesentlichen zwei Kunststoffteilen ausgebildet. Die beiden Kunststoffteile sind zu einer vertikalen Mittelebene, die in montiertem Zustand der Fahrradmittelebene entspricht, spiegelbildlich ausgebildet. Jede der beiden Kunststoffteil-Hälften weist somit eine Seitenwand 54, eine halbe Rückwand 56, eine halbe Vorderwand 58 und eine halbes Bodenelement 52 auf.

Im vorderen oberen Endbereich der Vorderwand 58 ist ferner ein Ansatz 76 vorgesehen. Dieser verdeckt eine Oberseite des Gabelschafts. Der Ansatz 76 ragt in Fahrtrichtung über den oberen Bereich des Gabelelements und dient u.A. als Aufprallschutz.

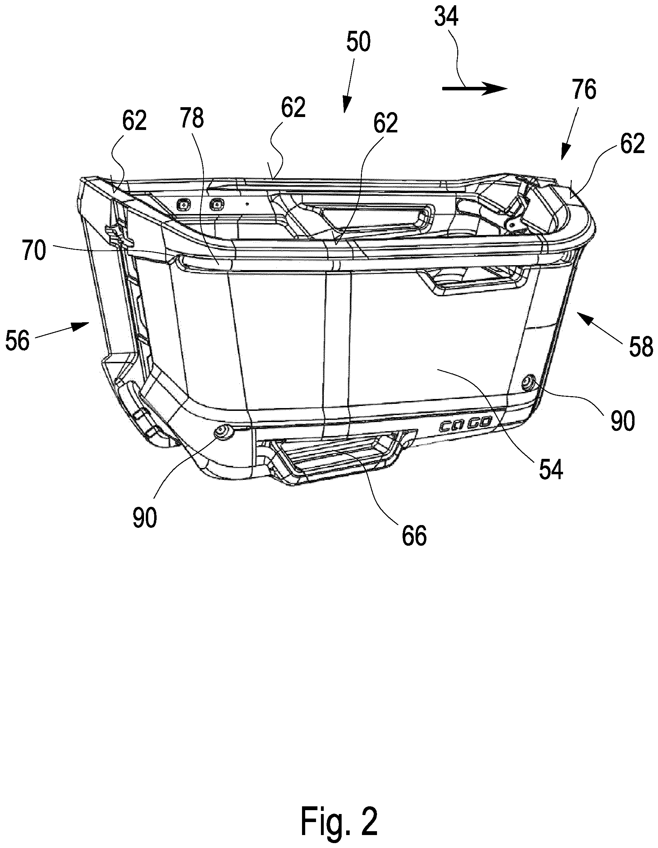

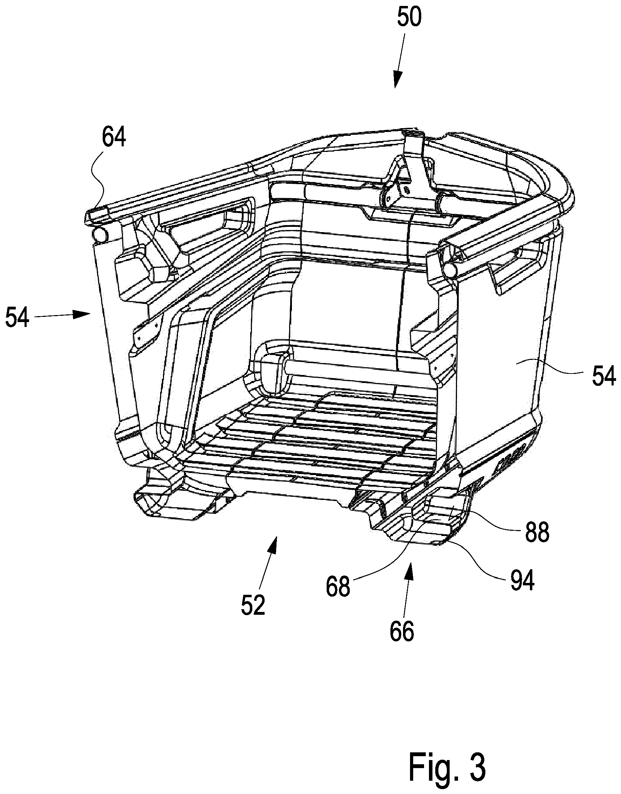

Die beiden Hälften aus Kunststoff werden zu dem in Fig. 2 dargestellten Lastenfahrradbehälter zusammengesetzt. Zur Fixierung bzw. Verbindung der beiden Hälften ist in einem oberen Bereich ein aus zwei Bügelelementen 78 bestehender Verbindungsbügel vorgesehen. Die beiden Bügelelemente werden im Bereich der Trennebene mit entsprechenden Verbindungselementen verbunden. Die Trennebene ist die in Fig. 3 dargestellte Vorderseite der Hälfte der Rückwand 56 bzw. der Hälfte der Vorderwand 58 sowie der Hälfte des Bodenelements 52. Die beiden Bügelelemente 78 werden fest miteinander verbunden bzw. verspannt, so dass diese eine Klammer im oberen Bereich des Lastenfahrradbehälters ausbilden.

Die beiden Seitenwände 54, die Rückwand 56 sowie die Vorderwand 58 weisen jeweils eine Oberkante 62 auf. An der Oberkante 62 kann nur in Teilbereichen oder umlaufend ein Kantenschutzelement 64 vorgesehen sein. Besonders bevorzugt ist es hierbei, dass das Kantenschutzelement 64 an den Oberkanten 62 der Seitenwände 54 insbesondere im Mittelbereich vorgesehen ist. Hierdurch ist es vermieden, dass insbesondere Kinder beim Ein- oder Aussteigen aus dem Lastenfahrradbehälter 50 die Oberkante 62 der Seitenwände 54 beschädigen. Zum Ein- und Aussteigen weist zumindest eine der beiden Seitenwände 54 vorzugsweise eine Trittöffnung 66 auf. Zum Schutz der Oberfläche der Trittöffnung 66 ist ein Oberflächenschutzelement 68 vorgesehen.

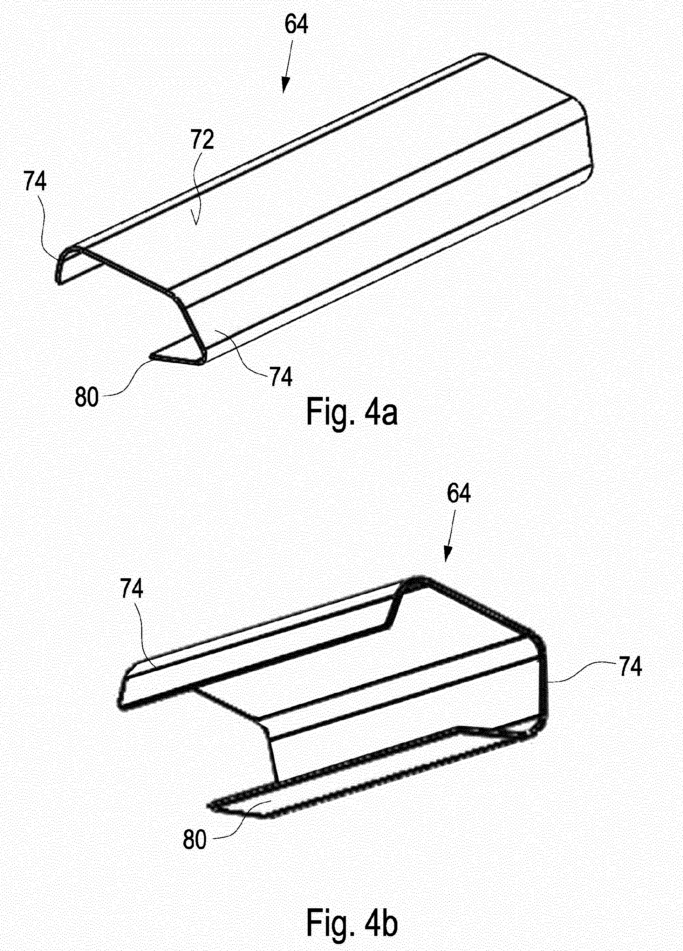

Das Kantenschutzelement 64 (Fign. 4a bis 4c) ist im dargestellten Ausführungsbeispiel einteilig ausgebildet, wobei es sich insbesondere um ein aus Blech hergestelltes Bauteil handelt. Eine Oberseite 72 des Kantenschutzelements 64 kann hierbei eine Textur zur Verbesserung der Rutschsicherheit aufweisen. Hierdurch ist es möglich, dass Kinder beispielsweise auf die Oberseite 72 steigen können und hierbei nicht abrutschen. Auch beim Beladen des Lastenfahrradbehälters 50 ist es möglich, einen Behälter o.dgl. auf der Oberseite 72 zunächst abzustellen, bevor dieser vollständig in den Lastenfahrradbehälter 50 gehoben wird.

Das Kantenschutzelement weist ferner zwei einander gegenüberliegende Seitenteile 74 auf, die bei von oben auf die Oberkante 62 aufgesteckten, d.h. montierten Kantenschutzelement 64, an einer Innenseite bzw. einer Außenseite der entsprechenden Wand 54,56,58 anliegen. Des Weiteren weist das Kantenschutzelement 64 einen Ansatz 80 auf. In montiertem Zustand weist der Ansatz 80 in Richtung der entsprechenden Wand 54,56,58, auf dessen Oberkante 62 das Kantenschutzelement 64 aufgesteckt wurde. Der Ansatz 80 hintergreift eine Wulst oder ragt in eine Nut. Im dargestellten Ausführungsbeispiel ist die Nut durch die umlaufende Vertiefung 70 ausgebildet, in der die Bügelelemente 78 angeordnet sind. Entsprechend ist oberhalb dieser Nut oder Vertiefung 70 eine Wulst angeordnet. Der Ansatz 80 des Kantenschutzelements greift somit von außen in diese Nut und ist in montiertem Zustand oberhalb der Bügelelemente 78 angeordnet.

Durch die Ausgestaltung des Kantenschutzelements 64, insbesondere durch das Vorsehen des Ansatzes 80 an dem Kantenschutzelement 64, ist in Einsetzrichtung (in den Fign. 2 und 3 von oben) ein Hinterschnitt ausgebildet.

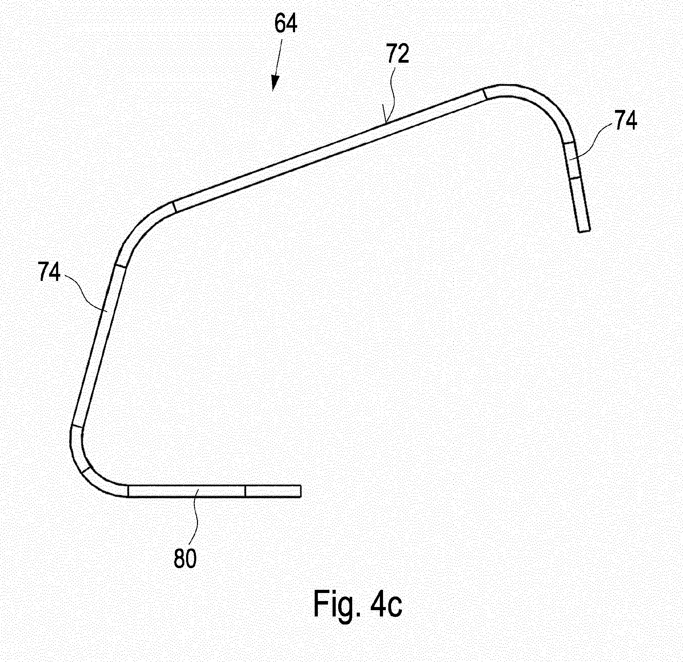

Je nach Ausführungsform des Kantenschutzelements kann der Ansatz 80 auch entfallen. Dies ist insbesondere dann möglich, wenn das Kantenschutzelement 64 durch Verkleben oder zumindest zusätzlich durch Verkleben fixiert wird. Wenn der Ansatz 80 nicht vorgesehen ist, kann das Kantenschutzelement entweder gerade enden, so dass das Seitenteil 74 gerade bzw. flach endet. Auch kann am in Fig. 4c unteren Ende des Seitenteils 74 noch ein bogenförmiger, nach innen weisender Ansatz vorgesehen sein, der ein klemmendes Hintergreifen bewirkt. Insofern ist sodann ggf. nicht unbedingt ein Verkleben erforderlich.

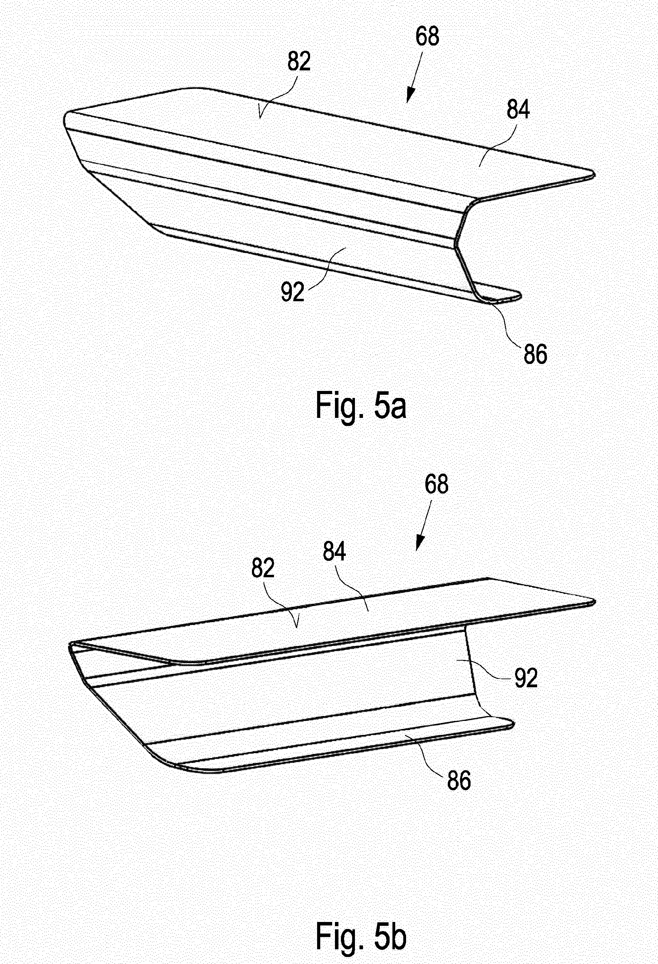

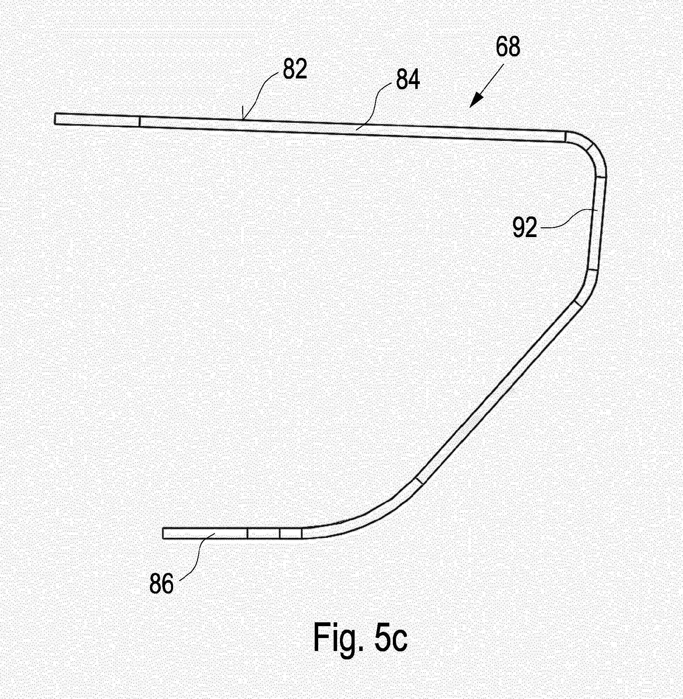

Das Oberflächenschutzelement 68 (Fign. 5a bis 5c) kann an einer Oberseite 82 eine Textur aufweisen. Bei der Oberseite 82 handelt es sich um die Fläche, auf die der Fuß aufgesetzt wird. Ferner weist das Oberflächenschutzelement 68 ein dem Oberteil 84 gegenüberliegendes Unterteil 86 auf, das in montiertem Zustand an der der Oberseite 88 gegenüberliegenden Unterseite angeordnet ist. Ferner weist das insbesondere einstückig ausgebildete Oberflächenschutzelement 68 ein Vorderteil 92 auf, das eine Vorderkante 94 bedeckt. Zur Montage wird das Oberflächenschutzelement 68 von außen auf den die Trittfläche ausbildenden unteren Bereich der Trittöffnung 66 aufgesteckt.

Da im dargestellten Ausführungsbeispiel das Oberflächenschutzelement 68 keinen Ansatz aufweist, der in eine Nut eingreift und in Montagerichtung einen Hinterschnitt ausbildet, wird das Oberflächenschutzelement 68 durch Verkleben fixiert. Hierzu ist es besonders bevorzugt, dass die Flächen, an denen die Innenseite des Oberflächenschutzelements 68 anliegt, entsprechend behandelt werden, um eine sichere Klebeverbindung zu gewährleisten. Dies kann durch Aufrauen o.dgl. erfolgen. Bevorzugt ist es, dass ein Fluorieren dieser Oberflächen erfolgt.

Zur Verbesserung der Fixierung des Kantenschutzelements 64 kann dies ebenfalls zusätzlich verklebt werden, wobei es auch hierbei wieder bevorzugt ist, dass die entsprechenden Oberflächen zur Verbesserung der Klebeverbindung behandelt sind.

## Patentansprüche

1. Lastenfahrradbehälter mit
einem Bodenelement (52), zwei einander gegenüberliegenden Seitenwänden (54), einer Rückwand (56),einer Vorderwand (58), und
einer mindestens an einer der Seitenwände (54) und/oder der Rückwand (56) und/oder der Vorderwand (58) vorgesehenen Trittöffnung (66)
**dadurch gekennzeichnet, dass**
die Trittöffnung (66) vollständig von der Seitenwand (54) und/oder der Rückwand (56) und/oder der Vorderwand (58) umgeben ist, wobei die Trittöffnung (66) insbesondere vollständig von dem Material der Seitenwand (54) und/oder der Rückwand (56) und/oder der Vorderwand (58) umgeben ist.

2. Lastenfahrradbehälter nach Anspruch 1, **gekennzeichnet durch** ein zumindest an einer Oberseite (88) der Trittöffnung (66) vorgesehenes Oberflächenschutzelement (68).

3. Lastenfahrradbehälter nach Anspruch 1 oder 2, **dadurch gekennzeichnet, dass** das Oberflächenschutzelement (68) zusätzlich an einer der Oberseite (88) gegenüberliegenden Unterseite und/oder Vorderkante (94) vorgesehen ist.

4. Lastenfahrradbehälter nach Anspruch 1 bis 3, **dadurch gekennzeichnet, dass** das Oberflächenschutzelement (68) einen im Wesentlichen U-förmigen Querschnitt aufweist.

5. Lastenfahrradbehälter nach einem der Ansprüche 1 bis 4, **dadurch gekennzeichnet, dass** das Oberflächenschutzelement kraftschlüssig, insbesondere durch Verkleben, verbunden ist.

6. Lastenfahrradbehälter nach Anspruch 5, **dadurch gekennzeichnet, dass** die Oberseiten der Trittöffnung (66), an denen des Oberflächenschutzelements angeordnet ist, zumindest teilweise zur kraftschlüssigen Verbindung behandelt sind.

7. Lastenfahrradbehälter nach Anspruch 6, **dadurch gekennzeichnet, dass** die Behandlung durch Halogenieren, insbesondere Fluorieren, erfolgt.

8. Lastenfahrradbehälter nach einem der Ansprüche 1 bis 7, **gekennzeichnet durch** ein an einer Oberkante (62) zumindest einer der Seitenwände (54) und/oder der Rückwand (56) und/oder der Vorderwand (58) vorgesehenes Kantenschutzelement (64).

9. Lastenfahrradbehälter nach Anspruch 8, **dadurch gekennzeichnet, dass** das Kantenschutzelement (64) formschlüssig mit der Oberkante (62) verbunden ist.

10. Lastenfahrradbehälter nach Anspruch 8 oder 9, **dadurch gekennzeichnet, dass** das Kantenschutzelement (64) die Oberkante (62) eine Innenseite und/oder eine Außenseite zumindest einer der Seitenwände (54) und/oder der Rückwand (56) und/oder der Vorderwand (58) umgreift.

11. Lastenfahrradbehälter nach einem der Ansprüche 8 bis 10, **dadurch gekennzeichnet, dass** im Bereich der Oberkante (62), insbesondere einer Außenseite und/oder einer Innenseite der zumindest einen Seitenwand (54) und/oder Rückwand (56) und/oder Vorderwand (58), im Bereich der Oberkante (62) eine Wulst vorgesehen ist, die ein Ansatz (86) des Kantenschutzelements umgreift.

12. Lastenfahrradbehälter nach Anspruch 11, **dadurch gekennzeichnet, dass** die Wulst einen Hinterschnitt ausbildet.

13. Lastenfahrradbehälter nach einem der Ansprüche 8 bis 12, **dadurch gekennzeichnet, dass** an der Oberkante (62) insbesondere an einer Außenseite und/oder einer Innenseite der zumindest einen Seitenwand (54) und/oder der Rückwand (56) und/oder der Vorderwand (58) im Bereich der Oberkante (62) eine Nut (70) vorgesehen ist, in die ein Ansatz (86) des Kantenschutzelements (68) ragt.

14. Lastenfahrradbehälter nach einem der Ansprüche 11 bis 13, **dadurch gekennzeichnet, dass** der Ansatz (86) des Kantenschutzelements (68) in moniertem Zustand nach innen in Richtung der zumindest einen Seitenwand (54) und/oder der Rückwand (56) und/oder der Vorderwand (58) ragt.

15. Lastenfahrradbehälter nach einem der Ansprüche 8 bis 14, **dadurch gekennzeichnet, dass** das Kantenschutzelement (68) die Oberkante (62) um mehr als 180° umgreift.

16. Lastenfahrradbehälter nach einem der Ansprüche 8 bis 15, **dadurch gekennzeichnet, dass** das Kantenschutzelement (68) umlaufend an allen Oberkanten (62) der Seitenwände (54), der Rückwand (56) und der Vorderwand (58) vorgesehen ist.

17. Lastenfahrradbehälter nach einem der Ansprüche 8 bis 16, **dadurch gekennzeichnet, dass** das Kantenschutzelement (68) kraftschlüssig mit der Oberkante (62) verbunden, insbesondere verklebt ist.

18. Lastenfahrradbehälter nach Anspruch 17, **dadurch gekennzeichnet, dass** die Oberkante (62) im Bereich des Kantenschutzelements (68) zumindest teilweise zur kraftschlüssigen Verbindung behandelt ist.

19. Lastenfahrradbehälter nach Anspruch 18, **dadurch gekennzeichnet, dass** die Behandlung durch Halogenieren, insbesondere Fluorieren, erfolgt.

20. Lastenfahrradbehälter nach einem der Ansprüche 1 bis 19, **dadurch gekennzeichnet, dass** das Kantenschutzelement (64) und/oder das Oberflächenschutzelement (68) ein verschleißfestes Material aufweist, insbesondere aus verschleißfestem Material hergestellt ist, wobei das Kantenschutzelement (64) und/oder das Oberflächenschutzelement (68) insbesondere als Metallblech ausgebildet ist.

21. Lastenfahrradbehälter nach einem der Ansprüche 1 bis 20, **dadurch gekennzeichnet, dass** die beide Seitenwände (54) und/oder die Rückwand (56) und/oder die Vorderwand (58) und/oder das Bodenelement (52) zumindest teilweise, insbesondere vollständig, aus Kunststoff hergestellt ist.

22. Lastenfahrradbehälter nach Anspruch 21, **dadurch gekennzeichnet, dass** der Kunststoff ein Partikelschaum, insbesondere EPP (expandierbares Polypropylen) aufweist, insbesondere aus diesem Material hergestellt ist.

## Claims

1. A cargo bike container comprising:
a bottom element (52), two side walls (54) opposite each other, a rear wall (54), a front wall (58), and
a step opening (66) provided at at least one of the side walls (54) and/or the rear wall (56) and/or the front wall (58),
**characterized in that**
the step opening (66) is completely surrounded by the side wall (54) and/or the rear wall (56) and/or the front wall (58), the step opening (66) being, in particular, completely surrounded by the material of the side wall (54) and/or the rear wall (56) and/or the front wall (58).

2. The cargo bike container according to claim 1, **characterized by** a surface protection element (68) provided at least on an upper side (88) of the step opening (66).

3. The cargo bike container according to claim 1 or 2, **characterized in that** the surface protection element (68) is additionally provided on a lower side opposite the upper side (88) and/or on a front edge (94).

4. The cargo bike container according to one of claims 1 to 3, **characterized in that** the surface protection element (68) has a substantially U-shaped cross section.

5. The cargo bike container according to one of claims 1 to 4, **characterized in that** the surface protection element is connected non-positively, in particular by gluing.

6. The cargo bike container according to claim 5, **characterized in that** the upper sides of the step opening (66), on which the surface protection element is arranged, are treated at least partially for a non-positive connection.

7. The cargo bike container according to claim 6, **characterized in that** the treatment is made by halogenation, in particular by fluorination.

8. The cargo bike container according to one of claims 1 to 7, **characterized by** an edge protection element (64) provided on an upper edge (62) of at least one the side walls (54) and/or the rear wall (56) and/or the front wall (58).

9. The cargo bike container according to claim 8, **characterized in that** the edge protection element (64) is positively connected to the upper edge (62).

10. The cargo bike container according to claim 8 or 9, **characterized in that** the edge protection element (64) engages around the upper edge (64), an inner side and/or an outer side of at least one of the side walls (54) and/or the rear wall (56) and/or the front wall (58).

11. The cargo bike container according to one of claims 8 to 10, **characterized in that** in the area of the upper edge (62), in particular an inner side and/or an outer side of the at least one side wall (54) and/or the rear wall (56) and/or the front wall (58), a bead is provided in the area of the upper edge (62), around which a projection (86) of the edge protection element engages.

12. The cargo bike container according to claim 11, **characterized in that** the bead forms an undercut.

13. The cargo bike container according to one of claims 8 to 12, **characterized in that** at the upper edge (62), in particular an inner side and/or an outer side of the at least one side wall (54) and/or the rear wall (56) and/or the front wall (58), a groove (70) is provided in the area of the upper edge (62), into which a protrusion (86) of the edge protection element (68) protrudes.

14. The cargo bike container according to one of claims 11 to 13, **characterized in that** in the mounted state, the protrusion (86) of the edge protection element (68) protrudes towards the at least one side wall (54) and/or the rear wall (56) and/or the front wall (58).

15. The cargo bike container according to one of claims 8 to 14, **characterized in that** the edge protection element (68) engages around the upper edge (62) for more than 180°.

16. The cargo bike container according to one of claims 8 to 15, **characterized in that** the edge protection element (68) is provided circumferentially on all upper edges (62) of the side walls (54), the rear wall (56) and the front wall (58).

17. The cargo bike container according to one of claims 8 to 16, **characterized in that** the edge protection element (68) is non-positively connected to the upper edge (52), in particular glued thereto.

18. The cargo bike container according to claim 17, **characterized in that** in the area of the edge protection element (68), the upper edge (62) is at least partially treated for a non-positive connection.

19. The cargo bike container according to claim 18, **characterized in that** the treatment is made by halogenation, in particular by fluorination.

20. The cargo bike container according to one of claims 1 to 19, **characterized in that** the edge protection element (64) and/or the surface protection element (68) comprise a wear-resistant material, in particular are made from a wear-resistant material, the edge protection element (64) and/or the surface protection element (68) being designed in particular as a metal sheet.

21. The cargo bike container according to one of claims 1 to 20, **characterized in that** both side walls (54) and/or the rear wall (56) and/or the front wall (58) and/or the bottom element (52) are made at least partially, in particular entirely of plastic material.

22. The cargo bike container according to claim 21, **characterized in that** the plastic material comprises a particle foam, in particular EPP (expandable polypropylene), the plastic material in particular being made of this material.

## Revendications

1. Réceptacle de bicyclette de transport doté
d'un élément de fond (52), de deux parois latérales (54) opposées l'une à l'autre, d'une paroi arrière (56), d'une paroi avant (58), et
d'une ouverture de marchepied (66) prévue au moins sur une des parois latérales (54) et/ou sur la paroi arrière (56) et/ou sur la paroi avant (58) **caractérisé en ce que**
l'ouverture de marchepied (66) est entièrement entourée par la paroi latérale (54) et/ou la paroi arrière (56) et/ou la paroi avant (58), dans lequel l'ouverture de marchepied (66) est en particulier entièrement entourée par la matière de la paroi latérale (54) et/ou de la paroi arrière (56) et/ou de la paroi avant (58).

2. Réceptacle de bicyclette de transport selon la revendication 1, **caractérisé par** un élément de protection de surface (68) prévu au moins sur une face supérieure (88) de l'ouverture de marchepied (66) .

3. Réceptacle de bicyclette de transport selon la revendication 1 ou 2, **caractérisé en ce que** l'élément de protection de surface (68) est en outre prévu sur une face inférieure et/ou un bord avant (94) opposé(e) à la face supérieure (88).

4. Réceptacle de bicyclette de transport selon la revendication 1 à 3, **caractérisé en ce que** l'élément de protection de surface (68) comporte une section transversale sensiblement en forme de U.

5. Réceptacle de bicyclette de transport selon l'une des revendications 1 à 4, **caractérisé en ce que** l'élément de protection de surface est lié par engagement de force, en particulier par collage.

6. Réceptacle de bicyclette de transport selon la revendication 5, **caractérisé en ce que** les faces supérieures de l'ouverture de marchepied (66), sur lesquelles l'élément de protection de surface est disposé, sont traitées au moins partiellement pour la liaison par engagement de force.

7. Réceptacle de bicyclette de transport selon la revendication 6, **caractérisé en ce que** le traitement s'effectue par halogénation, en particulier par fluoration.

8. Réceptacle de bicyclette de transport selon l'une des revendications 1 à 7, **caractérisé par** un élément de protection de bord (64) prévu sur un bord supérieur (62) d'au moins une des parois latérales (54) et/ou de la paroi arrière (56) et/ou de la paroi avant (58).

9. Réceptacle de bicyclette de transport selon la revendication 8, **caractérisé en ce que** l'élément de protection de bord (64) est lié au bord supérieur (62) par complémentarité de forme.

10. Réceptacle de bicyclette de transport selon la revendication 8 ou 9, **caractérisé en ce que** l'élément de protection de bord (64) entoure le bord supérieur (62) d'une face intérieure et/ou d'une face extérieure d'au moins une des parois latérales (54) et/ou de la paroi arrière (56) et/ou de la paroi avant (58).

11. Réceptacle de bicyclette de transport selon l'une des revendications 8 à 10, **caractérisé en ce que** dans la zone du bord supérieur (62), en particulier d'une face intérieure et/ou d'une face extérieure de l'au moins une des parois latérales (54) et/ou de la paroi arrière (56) et/ou de la paroi avant (58), est prévu dans la zone du bord supérieur (62) un bourrelet, lequel entoure un appendice (86) de l'élément de protection de bord.

12. Réceptacle de bicyclette de transport selon la revendication 11, **caractérisé en ce que** le bourrelet réalise une contre-dépouille.

13. Réceptacle de bicyclette de transport selon l'une des revendications 8 à 12, **caractérisé en ce que** sur le bord supérieur (62), en particulier sur une face extérieure et/ou une face intérieure de l'au moins une des parois latérales (54) et/ou de la paroi arrière (56) et/ou de la paroi avant (58), est prévue dans la zone du bord supérieur (62) une rainure (70), à l'intérieur de laquelle un appendice (86) de l'élément de protection de bord (68) fait saillie.

14. Réceptacle de bicyclette de transport selon l'une des revendications 11 à 13, **caractérisé en ce que** l'appendice (86) de l'élément de protection de bord (68), dans l'état monté, fait saillie vers l'intérieur en direction de l'au moins une des parois latérales (54) et/ou de la paroi arrière (56) et/ou de la paroi avant (58).

15. Réceptacle de bicyclette de transport selon l'une des revendications 8 à 14, **caractérisé en ce que** l'élément de protection de bord (68) entoure le bord supérieur (62) sur plus de 180°.

16. Réceptacle de bicyclette de transport selon l'une des revendications 8 à 15, **caractérisé en ce que** l'élément de protection de bord (68) est prévu comme périphérique sur tous les bords supérieurs (62) des parois latérales (54), de la paroi arrière (56) et de la paroi avant (58).

17. Réceptacle de bicyclette de transport selon l'une des revendications 8 à 16, **caractérisé en ce que** l'élément de protection de bord (68) est lié par engagement de force, en particulier par collage, au bord supérieur (62).

18. Réceptacle de bicyclette de transport selon la revendication 17, **caractérisé en ce que** le bord supérieur (62) est traité au moins partiellement dans la zone de l'élément de protection de bord (68) pour la liaison par engagement de force.

19. Réceptacle de bicyclette de transport selon la revendication 18, **caractérisé en ce que** le traitement s'effectue par halogénation, en particulier par fluoration.

20. Réceptacle de bicyclette de transport selon l'une des revendications 1 à 19, **caractérisé en ce que** l'élément de protection de bord (64) et/ou l'élément de protection de surface (68) comportent une matière résistante à l'usure et sont en particulier faits d'une matière résistante à l'usure, dans lequel l'élément de protection de bord (64) et/ou l'élément de protection de surface (68) sont en particulier réalisés comme tôle métallique.

21. Réceptacle de bicyclette de transport selon l'une des revendications 1 à 20, **caractérisé en ce que** les deux parois latérales (54) et/ou la paroi arrière (56) et/ou la paroi avant (58) et/ou l'élément de fond (52) sont fabriqués au moins partiellement, en particulier entièrement, en plastique.

22. Réceptacle de bicyclette de transport selon la revendication 21, **caractérisé en ce que** le plastique comporte une mousse particulaire, en particulier du PPE (polypropylène expansé), en particulier est fait de cette matière.
